# EUROPEAN PATENT APPLICATION

(11) **EP 4 815 127 A1**
(43) Date of publication of application: **30.09.2026**
(21) Application number: 24913393.5
(22) Date of filing: 26.12.2024
(51) Int. Cl.: H01M 50/121, H01M 50/124, H01M 50/126, H01M 50/119, H01M 50/131, H01M 50/105

(54) **POUCH FILM FOR SECONDARY BATTERIES AND POUCH-TYPE SECONDARY BATTERY HAVING SAME APPLIED THERETO**

(30) Priority: 27.12.2023 KR 20230192752; 24.12.2024 KR 20240194836
(71) Applicant: Youlchon Chemical Co., Ltd., Seoul 07057 (KR)
(72) Inventor: SONG, Nok Jung, Seoul 07057 (KR); HAN, Hee Sik, Ansan-si Gyeonggi-do 15430 (KR); KIM, Jin Ho, Ansan-si Gyeonggi-do 15430 (KR); JUNG, Jong Hyuk, Ansan-si Gyeonggi-do 15430 (KR); HEO, Ji Young, Ansan-si Gyeonggi-do 15430 (KR); JANG, Jee Eun, Ansan-si Gyeonggi-do 15430 (KR); KIM, Hui Hun, Ansan-si Gyeonggi-do 15430 (KR)
(74) Representative: Isarpatent
(86) International application number: PCT/KR2024/021103
(87) International publication number: WO 2025/143786

(57) **Abstract**

Disclosed are a pouch film for secondary batteries and a pouch-type secondary battery having same applied thereto. The disclosed pouch film for secondary batteries may comprise: a metal barrier layer; and a sealant layer bonded to the metal barrier layer with an adhesive layer interposed therebetween, wherein the sealant layer may comprise: a first skin layer; a second skin layer; and a main layer interposed therebetween, and the first skin layer, the main layer, and the second skin layer may be sequentially disposed in a direction away from the metal barrier layer. Each of the first skin layer, the main layer, and the second skin layer may be composed of a polymer-based material containing an elastomer, and the elastomer content in the main layer may be higher than that in each of the first and second skin layers.

## Description

### Technical Field

The present disclosure relates to a material/member related to a secondary battery and a secondary battery having the same applied thereto and, more particularly, to a pouch film for a secondary battery and a pouch-type secondary battery having the same applied thereto.

The Korean national research and development projects that supported the present disclosure are as follows.
Unique Project Number 1415185612
Project Serial Number 20022450
Government Department Ministry of Trade, Industry and Energy
Specialized Institution for Project Management Korea Planning & Evaluation Institute of Industrial Technology
Title of Research Program Materials and Parts Package-Type Program (Leading Company)
Title of Project Development of a Next-Generation Secondary Battery Pouch Capable of Achieving a High Adhesive Strength of Two Times or More (60°C)
Contribution Rate 1/1
Performing Institute YOULCHON CHEMICAL CO., LTD.
Research Period 2023.01.01 to 2023.12.31
Unique Project Number 2410004468
Project Serial Number 20022450
Government Department Ministry of Trade, Industry and Energy
Specialized Institution for Project Management Korea Planning & Evaluation Institute of Industrial Technology
Title of Research Program Materials and Parts Technology Development (Leading Company)
Title of Project Development of a Next-Generation Secondary Battery Pouch Capable of Achieving a High Adhesive Strength of Two Times or More (60°C)
Performing Institute YOULCHON CHEMICAL CO., LTD.
Research Period 2024.01.01 to 2024.12.31

### Background Art

A pouch-type secondary battery may have a structure in which an electrode assembly and an electrolyte are accommodated and sealed in a pouch formed of a thin and flexible plastic film and a metal foil. Since such a pouch-type battery structure does not use a metal case, unlike a conventional cylindrical battery or prismatic battery, the pouch-type battery may be much lighter and may be designed in various forms. The pouch-type battery may have a structure in which internal space efficiency is improved by stacking materials layer by layer without using a jelly roll in a wound form, and since the pouch-type battery is easy to manufacture in various sizes and shapes and may also be bent or folded, the pouch-type battery may have advantages such as high space efficiency, high energy density, and high design flexibility. Accordingly, the pouch-type secondary battery may be usefully applied to various devices such as an electric vehicle, a smartphone, and a notebook computer.

In manufacturing the pouch-type secondary battery, a pouch film may be one of important components as a packaging material that surrounds and protects battery internal materials and provides sealing properties. The pouch film for a secondary battery may generally include a sealant layer, a barrier layer of a metal material, an outer film, and the like. The barrier layer of the metal material may serve to protect a battery cell from oxygen, moisture, and other environmental factors, and may be required to have high barrier performance and formability. The sealant layer is a portion that directly contacts an electrolyte while providing sealing properties, and needs to have excellent resistance to chemical corrosion or damage caused by the electrolyte. In the case of the outer film, wear resistance, moisture permeability resistance, chemical resistance, and the like may be required so as to protect the battery cell from an external environment.

Since the pouch film plays a key role in ensuring safety and reliability of the secondary battery, strong adhesion properties between the barrier layer and the sealant layer and high chemical resistance, durability, and heat resistance of the sealant layer are required. In particular, the sealant layer is required to maintain high chemical resistance and durability even in an electrolyte environment and a high-temperature environment. In addition, after a sealing step by bonding between pouch films, a bonded body should have peel strength (peel strength between pouch films) of a reference level (specification) or more, and a delamination phenomenon in which the barrier layer of a metal material is exposed is required to be prevented. When the barrier layer of the metal material is exposed due to delamination after the sealing step, the barrier layer is exposed to the electrolyte, and thus a significant issue may occur in the battery cell.

Recently, as a size and capacity of the secondary battery increase and a possibility that the secondary battery is exposed to a high-temperature environment increases, physical property requirements required for the pouch film for a secondary battery are becoming more stringent. Accordingly, in order to improve safety and reliability of the secondary battery, development of a pouch film capable of satisfying both physical property requirements required for the pouch film in an electrolyte environment and a high-temperature environment and physical property requirements required for a pouch film bonded body after a sealing step is required.

### Disclosure

### Technical Problem

An objective of the present disclosure is to provide a pouch film for a secondary battery capable of improving safety and reliability of the secondary battery.

In addition, an objective of the present disclosure is to provide a pouch film for a secondary battery having excellent chemical resistance, heat resistance, delamination resistance, and durability.

In addition, an objective of the present disclosure is to provide a pouch film for a secondary battery capable of satisfying both physical property requirements required for the pouch film itself in an electrolyte environment and a high-temperature environment and physical property requirements required for a pouch film bonded body after a sealing step.

In addition, an objective of the present disclosure is to provide a pouch-type secondary battery to which the above-described pouch film for a secondary battery is applied.

The objectives of the present disclosure are not limited to the above-mentioned objectives, and other objectives not mentioned above will be understood by those skilled in the art from the following description.

### Technical Solution

According to an embodiment of the present disclosure, there is provided a pouch film for a secondary battery, the pouch film including: a metal barrier layer; and a sealant layer bonded to the metal barrier layer with an adhesive layer interposed therebetween, wherein the sealant layer may include a first skin layer, a second skin layer, and a main layer disposed therebetween, wherein the first skin layer, the main layer, and the second skin layer may be sequentially disposed from a side on which the metal barrier layer is disposed, wherein each of the first skin layer, the main layer, and the second skin layer may be formed of a polymer-based material comprising an elastomer, and wherein an elastomer content of the main layer may be higher than an elastomer content of each of the first skin layer and the second skin layer.

A ratio (A:B) of the elastomer content (A) of the main layer to the elastomer content (B) of the first skin layer may range from about 1:0.67 to about 1:0.74.

A ratio (A:C) of the elastomer content (A) of the main layer to the elastomer content (C) of the second skin layer may range from about 1:0.67 to about 1:0.74.

In a ratio (A:B:C) of the elastomer content (A) of the main layer, the elastomer content (B) of the first skin layer, and the elastomer content (C) of the second skin layer, A may be about 1, B may range from about 0.67 to 0.74, and C may range from about 0.67 to 0.74.

The elastomer content of the main layer may be in a range of about 10 wt% to 15 wt%, the elastomer content of the first skin layer may be in a range of about 6.7 wt% to 10.8 wt%, and the elastomer content of the second skin layer may be in a range of about 6.7 wt% to 10.8 wt%.

A sum of the elastomer content of the main layer, the elastomer content of the first skin layer, and the elastomer content of the second skin layer may be in a range of about 26 wt% to 37 wt%.

Each of the first skin layer, the main layer, and the second skin layer may include a polypropylene-based material as a main component.

The polypropylene-based material may be cast polypropylene (CPP), but is not limited thereto, and may also be various other materials.

The metal barrier layer may include stainless steel (SUS).

The metal barrier layer may be formed of stainless steel (SUS) having a thermal conductivity of about 15 W/m·k or more.

The adhesive layer may have a melting temperature (Tm) of about 140°C or more.

In a ratio (A:B:C) of the elastomer content (A) of the main layer, the elastomer content (B) of the first skin layer, and the elastomer content (C) of the second skin layer, A may be about 1, B may range from about 0.67 to 0.74, and C may range from about 0.67 to 0.74, the metal barrier layer may be formed of stainless steel (SUS) having a thermal conductivity of about 15 W/m·k or more, and the adhesive layer may have a melting temperature (Tm) of about 140°C or more.

The pouch film may further include: an outer layer bonded to the metal barrier layer, wherein the metal barrier layer may be disposed between the outer layer and the sealant layer.

According to another embodiment of the present disclosure, there is provided a pouch-type secondary battery to which the pouch film for a secondary battery described above is applied.

### Advantageous Effects

According to embodiments of the present disclosure, it is possible to implement a pouch film for a secondary battery capable of improving safety and reliability of the secondary battery. According to the embodiments of the present disclosure, it is possible to implement a pouch film for a secondary battery having excellent chemical resistance, heat resistance, delamination resistance, and durability.

In particular, according to the embodiments of the present disclosure, it is possible to implement a pouch film for a secondary battery capable of satisfying both physical property requirements required for the pouch film itself in an electrolyte environment and a high-temperature environment and physical property requirements required for a pouch film bonded body after a sealing step. The pouch film for a secondary battery according to the embodiments can satisfy physical property requirements required in a delamination test on the pouch film itself under electrolyte immersion and high-temperature conditions and physical property requirements required in a peel test between pouch films after the sealing step.

When the pouch film for a secondary battery according to the embodiments is applied, it is possible to manufacture a pouch-type secondary battery having excellent safety, reliability, and durability.

However, effects of the present disclosure are not limited to the above effects, and may be variously expanded without departing from the technical spirit and scope of the present disclosure.

### Description of Drawings

FIG. 1 is a cross-sectional view illustrating a pouch film for a secondary battery according to an embodiment of the present disclosure.
FIG. 2 is a view illustrating a test method for a pouch film for a secondary battery according to an embodiment of the present disclosure.
FIG. 3 is a cross-sectional view illustrating a delamination aspect corresponding to a suitable (OK) case in an electrolyte immersion and high-temperature condition delamination test (first test) for a pouch film for a secondary battery according to an embodiment of the present disclosure.
FIGS. 4 and 5 are cross-sectional views illustrating delamination aspects corresponding to unsuitable (NG) cases in the electrolyte immersion and high-temperature condition delamination test (first test) for a pouch film for a secondary battery.
FIG. 6 is a photographic image illustrating a case in which a delamination phenomenon corresponding to an unsuitable (NG) case in the electrolyte immersion and high-temperature condition delamination test (first test) for a pouch film for a secondary battery has occurred.
FIG. 7 is a photographic image illustrating a case in which delamination corresponding to a suitable (OK) case in the electrolyte immersion and high-temperature condition delamination test (first test) for a pouch film for a secondary battery according to an embodiment of the present disclosure has occurred.
FIGS. 8 and 9 are cross-sectional views illustrating peeling aspects corresponding to suitable (OK) cases in a peel test between pouch films after sealing (second test) for a pouch film for a secondary battery according to an embodiment of the present disclosure.
FIGS. 10 and 11 are cross-sectional views illustrating peeling aspects corresponding to unsuitable (NG) cases in the peel test between pouch films after sealing (second test) for a pouch film for a secondary battery.
FIG. 12 is a cross-sectional view illustrating a pouch film for a secondary battery according to an embodiment of the present disclosure.

### Mode for Invention

Hereinafter, embodiments of the present disclosure will be described in detail with reference to the accompanying drawings.

The embodiments of the present disclosure to be described below are provided to more clearly explain the present disclosure to those skilled in the art, and the scope of the present disclosure is not limited by the following embodiments, and the following embodiments may be modified in various other forms.

Terms used herein are used to describe specific embodiments, and are not intended to limit the present disclosure. As used herein, a term in a singular form may include plural forms unless the context clearly indicates otherwise. In addition, the terms "comprise" and/or "comprising" as used herein specify the presence of stated shapes, steps, numbers, operations, members, elements, and/or groups thereof, and do not preclude the presence or addition of one or more other shapes, steps, numbers, operations, members, elements, and/or groups thereof. In addition, the term "connection" as used herein means not only that certain members are directly connected, but also encompasses a concept including a case in which another member is further interposed between the members so that the members are indirectly connected.

In addition, when a member is positioned "on" another member in the present specification, this includes not only a case in which the member is in contact with the another member, but also a case in which still another member exists between the two members. The term "and/or" as used herein includes any one of the listed items and all combinations of one or more thereof. In addition, terms of degree such as "about" and "substantially" as used herein are used as a numerical or degree range of the stated value or in a meaning close thereto in consideration of inherent manufacturing and material tolerances, and are used to prevent an infringer from unfairly exploiting the disclosed content in which exact or absolute values are stated for facilitating understanding of the present disclosure.

Hereinafter, the embodiments of the present disclosure will be described in detail with reference to the accompanying drawings. Sizes or thicknesses of areas or parts illustrated in the accompanying drawings may be somewhat exaggerated for clarity of the specification and convenience of description. Throughout the detailed description, like reference numerals refer to like elements.

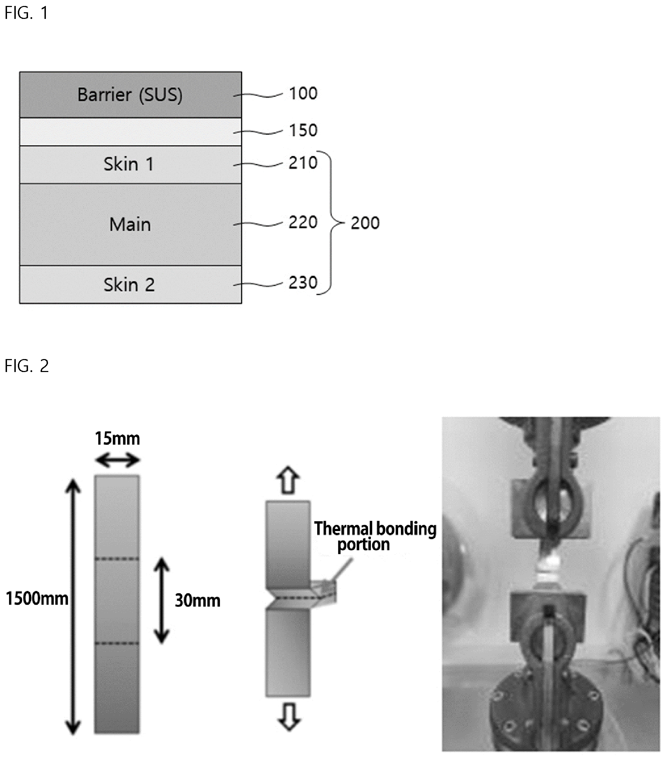

FIG. 1 is a cross-sectional view illustrating a pouch film for a secondary battery according to an embodiment of the present disclosure.

Referring to FIG. 1, the pouch film for a secondary battery according to an embodiment of the present disclosure may include a metal barrier layer (100) and a sealant layer (200) bonded to the metal barrier layer (100) with an adhesive layer (150) interposed therebetween. The adhesive layer (150) may be provided on one surface of the metal barrier layer (100), and the sealant layer (200) may be bonded to the one surface of the metal barrier layer (100) with the adhesive layer (150) interposed therebetween. The adhesive layer (150) for bonding the metal barrier layer (100) and the sealant layer (200) to each other may be disposed between the metal barrier layer (100) and the sealant layer (200).

The metal barrier layer (100) may include, for example, stainless steel (SUS) or may be formed of stainless steel (SUS). Stainless steel (SUS) may have a higher elongation than aluminum (Al), and may have physical properties different from those of aluminum (Al). In this regard, when stainless steel (SUS) is applied to the metal barrier layer (100), it is necessary to configure the sealant layer (200) differently from a case in which aluminum (Al) is used. In addition, when stainless steel (SUS) is applied to the metal barrier layer (100), solvent-dry lamination (SDL) may be used for applying an adhesive to form the adhesive layer (150). In addition, extrusion lamination or extrusion coating (EC) may be applied.

Solvent-dry lamination (SDL) is a method in which a metal layer is bonded on a cast polypropylene (CPP) layer by using a solvent-type adhesive and the solvent-type adhesive is dried, and accordingly, a sealant layer manufactured thereby is a CPP layer. Meanwhile, extrusion lamination is a method in which, when polypropylene, particularly cast polypropylene (CPP), mainly used for a sealant layer is bonded to a metal layer, a polypropylene resin is extruded, and as a result, the sealant layer is composed of an extruded polypropylene (PP) layer and a CPP layer. In addition, an EC method is not a method in which a sealing resin layer or film, such as a polypropylene-based resin layer, is bonded (laminated) to the metal barrier layer, as in extrusion lamination or solvent-dry lamination (SDL), but is a method for forming the sealant layer in manufacturing a cell pouch film, in which a polyolefin-based resin, preferably, a polypropylene-based resin, is directly extruded (or co-extruded) onto the metal barrier layer to form the sealant layer. As a result, the sealant layer is composed of an extrusion-formed layer, for example, an extrusion-formed polypropylene layer. The sealant layer formed by such EC may also be formed by co-extruding a first extrusion layer, a second extrusion layer, and a third extrusion layer.

In the embodiment of the present disclosure, the configuration of the metal barrier layer (100) is not limited to that described above. In other embodiments, the metal barrier layer (100) may include a metal other than stainless steel (SUS). For example, the metal barrier layer (100) may include at least one of stainless steel (SUS), aluminum (Al), titanium (Ti), nickel (Ni), and copper (Cu). The metal barrier layer (100) may include an alloy or may have a laminated structure. The metal barrier layer (100) may have a thickness of about 1 µm to 100 µm. The metal barrier layer (100) may be a kind of thin film or foil. The thickness of the metal barrier layer (100) may be, as a nonlimiting example, about 40 µm to 80 µm. Depending on the thickness of the metal barrier layer (100), physical properties such as barrier properties and tensile strength of the pouch film may be adjusted.

The sealant layer (200) may have a multilayer structure in terms of diversifying functions. As a specific example, in the case of a 3-layer structure, a main layer (220) is designed in consideration of an influence on overall physical properties of the sealant layer. The main layer (220) may be designed to have desired elongation and rigidity so as to improve formability, or may be designed to have an appropriate degree of crystallinity so as to enhance insulation properties. In addition, a first skin layer (210) is designed to improve adhesion to a surface treatment agent or an adhesive, and a second skin layer (230) is designed to have an appropriate melting temperature so that sealing is well performed. As a specific example, the melting temperature of the second skin layer (230) may be designed to be lower than that of the main layer (220), or may be designed similarly thereto, so that induction of interfacial delamination is controlled, thereby improving high-temperature stability of a cell pouch film.

According to an embodiment of the present disclosure, the sealant layer (200) may include the first skin layer (210), the second skin layer (230), and the main layer (220) disposed therebetween. The first skin layer (210), the main layer (220), and the second skin layer (230) may be sequentially disposed from a side on which the metal barrier layer (100) is disposed. In other words, the first skin layer (210), the main layer (220), and the second skin layer (230) may be sequentially disposed from one surface of the adhesive layer (150). The first skin layer (210) may be adjacent to the metal barrier layer (100), and the second skin layer (230) may be in contact with an electrolyte. The sealant layer (200) may have a 3-layer structure including the first skin layer (210), the main layer (220), and the second skin layer (230). For example, the sealant layer (200) may be formed as a 3-layer film in which the main layer (220) is positioned between the two skin layers (210, 230) by using a method of melt-extruding a raw material composition.

According to an embodiment of the present disclosure, the sealant layer (200) is formed by a solvent-dry lamination (SDL) in which the sealant layer (200) is supplied in a film form and laminated to the metal barrier layer (100). The film of the sealant layer (200) may be formed in a 3-layer structure according to, for example, a co-extrusion method. That is, the sealant layer (200) may be formed by simultaneously extruding, at a high temperature, resins serving as raw materials of the first skin layer (210), the main layer (220), and the second skin layer (230), thereby molding a film having a multilayer structure. In addition, the metal barrier layer (100) and the sealant layer (200) may be laminated to each other by the SDL. In other words, the sealant layer (200) may be laminated to the metal barrier layer (100) by the adhesive layer (150), which is an adhesive layer. In another embodiment, the sealant layer (200) may be formed by extrusion lamination. The sealant layer (200) is formed in a manner in which an extruded layer is formed by co-extrusion and a polypropylene film having a 3-layer structure is laminated. As described above, co-extrusion, film lamination, extrusion lamination, and the like may be used in a process of forming the pouch film. However, the above-described methods are merely illustrative, and embodiments of the present disclosure are not limited thereto. The first skin layer (210) may be referred to as a first auxiliary layer or a first sub-layer, and similarly, the second skin layer (230) may be referred to as a second auxiliary layer or a second sub-layer. The main layer (220) may be referred to as an intermediate layer or a core layer.

Each of the first skin layer (210), the main layer (220), and the second skin layer (230) may be formed of a polyolefin-based resin including an elastomer. The polyolefin-based resin has excellent electrolyte resistance and excellent insulation properties, and accordingly, the sealant layer including the polyolefin-based resin may also have excellent electrolyte resistance and excellent insulation properties derived from the polyolefin-based resin.

The polyolefin-based resin may include, for example, a polyolefin derived from olefin or a derivative thereof, a copolymer thereof, or a blend including at least one thereof. For example, the polyolefin-based resin layer may include at least one selected from a group consisting of polyethylene, polypropylene, polybutylene, a copolymer derived from a monomer derived from ethylene and/or propylene and a monomer derived from alpha-olefin, or a blend thereof.

Each of the first skin layer (210), the main layer (220), and the second skin layer (230) may be formed of a polyolefin-based resin, and may also include an elastomer. Here, the elastomer may be a kind of additive or auxiliary material. In an embodiment of the present disclosure, an elastomer content of the main layer (220) may be higher than an elastomer content of each of the first skin layer (210) and the second skin layer (230).

The sealant layer may form a sealing portion by thermal bonding (for example, bonding by applying heat and pressure to the sealant layers in contact with each other). Accordingly, by using this, a body portion of the battery may be sealed by thermally bonding the sealant layer of the pouch film for an exterior of the secondary battery to form the sealing portion.

The polypropylene-based material may be, for example, cast polypropylene (CPP), but is not limited thereto, and various other materials may also be applicable. As a nonlimiting example, in some cases, the polypropylene-based material may be oriented polypropylene (OPP), biaxially oriented polypropylene (BOPP), monoaxially oriented polypropylene (MOPP), or the like.

The pouch film according to an embodiment of the present disclosure may have excellent electrolyte resistance characteristics, that is, chemical resistance, heat resistance, delamination resistance, and durability. This will be described later in more detail.

According to an embodiment, each of the first skin layer (210), the main layer (220), and the second skin layer (230) may include, as a main component (main constituent material), a polypropylene-based material. For example, a content of the polypropylene-based material in the main layer (220) may be about 50 wt% to 90 wt%. A content of the polypropylene-based material in the first skin layer (210) may be about 50 wt% to 94 wt%. A content of the polypropylene-based material in the second skin layer (230) may be about 50 wt% to 94 wt%. The content of the polypropylene-based material in the main layer (220) may be lower than the content of the polypropylene-based material in each of the first skin layer (210) and the second skin layer (230). The polypropylene-based material may be, for example, cast polypropylene (CPP). In this case, each of the first skin layer (210), the main layer (220), and the second skin layer (230) may be a polymer film including CPP as a main component. The first skin layer (210) may be a CPP-based first skin layer, the main layer (220) may be a CPP-based main layer, and the second skin layer (230) may be a CPP-based second skin layer.

According to an example, the first skin layer (210) may include random polypropylene (rPP), ter-polypropylene (ter-PP), and block polypropylene (bPP) as a matrix, and may include, as additives to the first skin layer (210), an elastomer, a slip agent, and the like. The random polypropylene (rPP) may be composed of a random copolymer of a propylene monomer and a small amount of another olefin monomer, may have excellent impact strength and flexibility as compared with a homo polypropylene resin, and may be transparent due to a small amount of crystals causing light scattering. For example, the random polypropylene (rPP) may be a propylene-ethylene random copolymer or a propylene-1-butene random copolymer, but is not limited thereto. The ter-polypropylene (ter-PP) may be a random copolymer of a propylene monomer and a small amount of two other olefin monomers, and may have excellent tensile strength. For example, the ter-polypropylene (ter-PP) may be a propylene-ethylene-1-butene random terpolymer, but is not limited thereto. The block polypropylene (bPP) is a block structure of polypropylene, in which other monomer blocks are regularly arranged between polypropylene chains, and may have excellent heat-sealability, chemical resistance, flexibility, and durability.

In the first skin layer (210), a weight of polypropylene including the random polypropylene, the ter-polypropylene, and the block polypropylene may be about 50 wt% to 94 wt% or about 50 wt% to 90 wt% on the basis of a total weight of the first skin layer (210). When the polypropylene content exceeds about 94 wt% or about 90 wt%, a whitening phenomenon may occur during stretching of the pouch film, and when the polypropylene content is less than about 50 wt%, a content of elastomer is relatively increased, so that low-temperature sealing properties are improved, but high-temperature stability and chemical resistance may be deteriorated.

The main layer (220) may include homo polypropylene and block polypropylene. When ter-polypropylene or random polypropylene is applied to the main layer (220), the main layer (220) may be vulnerable to a swelling phenomenon caused by an electrolyte, and mechanical properties such as tensile strength and rigidity may be deteriorated. As additives, an elastomer, a slip agent, and the like may be used in the main layer (220). The homo polypropylene may be formed only from propylene, and may have a molecular weight distribution in which a ratio (Mw/Mn) of a weight average molecular weight (Mw) to a number average molecular weight (Mn) is about 5.0 or less. The homo polypropylene may have a melting temperature (Tm) of about 150°C or more or about 160°C or more for heat resistance.

In the main layer (220), a weight of polypropylene including homo polypropylene and block polypropylene may be about 50 wt% to 90 wt% on the basis of a total weight of the main layer (220), and, in this case, a content of the homo polypropylene may not exceed about 50 wt%. When the polypropylene content exceeds 90 wt% or the homo polypropylene content exceeds about 50 wt%, a whitening phenomenon may occur when the pouch film is stretched, and when the polypropylene content is too low, an elastomer content is relatively increased, so that low-temperature sealing properties are improved, but high-temperature stability and chemical resistance may be deteriorated.

The second skin layer (230) may be a layer in direct contact with the electrolyte, and may have chemical resistance improved by applying at least one of homo polypropylene, random polypropylene, ter-polypropylene, and block polypropylene to the second skin layer (230). As a specific example, the second skin layer (230) may include homo polypropylene, random polypropylene, ter-polypropylene, and block polypropylene. Alternatively, the second skin layer (230) may include homo polypropylene and block polypropylene. As additives to the second skin layer (230), an elastomer, a slip agent, and the like may be used.

In the second skin layer (230), a weight of polypropylene including homo polypropylene, random polypropylene, ter-polypropylene, and block polypropylene (or polypropylene including homo polypropylene and block polypropylene) may be about 50 wt% to 94 wt% or about 50 wt% to 90 wt% on the basis of a total weight of the second skin layer (230). In this case, a content of the homo polypropylene may not exceed about 50 wt%. When the content of the polypropylene exceeds about 94 wt% or about 90 wt%, or when the content of the homo polypropylene exceeds about 50 wt%, a whitening phenomenon may occur when the pouch film is stretched, and when the content of the homo polypropylene is less than about 50 wt%, an elastomer content is relatively increased, so that low-temperature sealing properties are improved, but high-temperature stability and chemical resistance may be deteriorated.

The elastomer may be added to the first skin layer (210), the main layer (220), and the second skin layer (230) in order to secure formability, sealability, and the like. The elastomer may include at least one selected from a group consisting of a thermoplastic polyolefin elastomer (TPO), reactor-made thermoplastic olefin (RTPO), and thermoplastic polyurethane (TPU). Here, the thermoplastic polyolefin elastomer (TPO) may include, for example, ethylene propylene rubber (EPR), ethylene butene rubber (EBR), a linear low density polyethylene (LLDPE)-based elastomer, and the like.

The material composition of the first skin layer (210), the main layer (220), and the second skin layer (230) is not limited to that described above, and may vary depending on circumstances. The first skin layer (210) may be formed of various materials depending on an application target, a size, a use, and the like of the pouch film. For example, various polymers such as polypropylene, polyethylene, and high-density polyethylene (HDPE), or a combination thereof, may be used in the first skin layer (210) in order to protect the main layer (220) and improve aesthetics.

The sealant layer (200) may have, for example, a thickness of about 20 µm to 200 µm. The first skin layer (210) may have a thickness corresponding to about 10% to 20% of the thickness of the entire sealant layer (200) in order to secure adhesion to metal. The main layer (220) may have a thickness corresponding to about 50% to 80% of the thickness of the entire sealant layer (200) in order to secure at least high-temperature stability, chemical resistance, and the like, including mechanical rigidity. The second skin layer (230) may have a thickness corresponding to about 10% to 20% of the thickness of the entire sealant layer (200) in order to secure adhesiveness and electrolyte resistance characteristics (electrolyte resistance properties). However, an appropriate thickness range of the sealant layer (200) and thickness ranges of the layers (210, 220, 230) constituting the sealant layer (200) are not limited to those described above, and may vary depending on circumstances.

According to an embodiment, a ratio (A:B) of an elastomer content (A) of the main layer (220) to an elastomer content (B) of the first skin layer (210) may range from about 1:0.67 to about 1:0.74. In addition, a ratio (A:C) of the elastomer content (A) of the main layer (220) to an elastomer content (C) of the second skin layer (230) may range from about 1:0.67 to about 1:0.74. Further, in a ratio (A:B:C) of the elastomer content (A) of the main layer (220), the elastomer content (B) of the first skin layer (210), and the elastomer content (C) of the second skin layer (230), A may be 1, B may range from about 0.67 to about 0.74, and C may range from about 0.67 to about 0.74. The elastomer content of the main layer (220) is preferably higher than the elastomer content of each of the first skin layer (210) and the second skin layer (220), while having an appropriate degree of difference. When these conditions are satisfied, chemical resistance, heat resistance, delamination resistance, durability, sealability, and the like of the pouch film according to the embodiment may be improved. Depending on elastomer content conditions (content ratio conditions) of the first skin layer (210), the main layer (220), and the second skin layer (230), electrolyte resistance characteristics, high-temperature resistance, delamination patterns, and the like of the pouch film may vary. This will be described later in more detail on the basis of specific experimental results.

As a specific example, the elastomer content of the main layer (220) may be in a range of about 10 wt% to 15 wt%, the elastomer content of the first skin layer (210) may be in a range of about 6.7 wt% to 10.8 wt%, and the elastomer content of the second skin layer (230) may be in a range of about 6.7 wt% to 10.8 wt%. Under these content range conditions, a ratio (A:B:C) of the elastomer content (A) of the main layer (220), the elastomer content (B) of the first skin layer (210), and the elastomer content (C) of the second skin layer (230) may satisfy a condition of 1:0.67 to 0.74:0.67 to 0.74. However, the above-described elastomer content range conditions of the respective layers (210, 220, 230) are illustrative, and may vary depending on circumstances.

According to an embodiment, a sum of the elastomer content of the main layer (220), the elastomer content of the first skin layer (210), and the elastomer content of the second skin layer (230) may be in a range of about 26 wt% to 37 wt%. When the sum of the elastomer content is less than about 26 wt%, formability of the sealant layer (200) may be deteriorated. When the sum of the elastomer content exceeds about 37 wt%, insulation resistance of the sealant layer (200) may be deteriorated. Therefore, in the sealant layer (200), the sum of the elastomer content may preferably be in a range of about 26 wt% to 37 wt%. This will be described later in more detail on the basis of specific experimental results.

Meanwhile, in an embodiment of the present disclosure, the metal barrier layer (100) may be formed of stainless steel (SUS) having a thermal conductivity of about 15 W/m·k or more, or may include the same. For example, when the metal barrier layer (100) is formed of stainless steel (SUS), the thermal conductivity thereof may be about 15 W/m·k or more. The thermal conductivity of the stainless steel (SUS) applied to the embodiment may be about 15 W/m·k to 30 W/m·k, or about 15 W/m·k to 25 W/m·k. The thermal conductivity of stainless steel (SUS) may vary depending on a type thereof, and in an embodiment of the present disclosure, stainless steel (SUS) having a thermal conductivity of about 15 W/m·k or more may be used. In this case, properties such as chemical resistance, heat resistance, delamination resistance, durability, and sealability of the pouch film may be improved. This will be described later in more detail on the basis of specific experimental results.

The adhesive layer (150) may serve to enhance adhesion between the metal barrier layer (100) and the sealant layer (200). For example, the adhesive layer (150) may be formed of a polyurethane-based two-component curable composition, and may have excellent thermal stability by allowing packaging material to maintain sterility according to heating and sterilization treatment after sealing. More specifically, the adhesive layer (150) may be composed of a base component including a polyurethane resin and a curing agent including isocyanate. The base component including a polyurethane resin and the curing agent including isocyanate may be mixed, for example, at about 95:5 to 70:30 wt% to provide a fast curing rate and strong adhesion. A mixing ratio of the base component to the curing agent A may be about 90:10 to 80:20.

The thickness of the adhesive layer (150) may vary depending on the thicknesses of the metal barrier layer (100) and the sealant layer (200), and may be, as a nonlimiting example, about 0.1 µm to 30 µm. As a more specific example, the thickness of the adhesive layer (150) may be about 0.5 µm to 10 µm, or about 1 µm to 5 µm. Within the above-described thickness range, adhesion between the metal barrier layer (100) and the sealant layer (200) may be effectively secured.

According to an embodiment, the adhesive layer (150) may have a melting temperature (Tm) of about 140°C or more. The melting temperature (Tm) of the adhesive layer (150) may be, for example, about 140°C to 200°C, or about 140°C to 180°C. When these conditions are satisfied, characteristics such as chemical resistance, heat resistance, delamination resistance, peel strength, and durability of the pouch film according to the embodiment may be improved. This will be described later in more detail on the basis of specific experimental results.

The pouch film for a secondary battery according to an embodiment of the present disclosure may have excellent chemical resistance, heat resistance, delamination resistance, and durability in an electrolyte exposure environment and a high-temperature environment. In addition, after a sealing step of bonding two pouch films for a secondary battery, a pouch film bonded body formed by the bonding may have a peel strength between the pouch films of a reference level (specification) or more, and a delamination phenomenon in which the metal barrier layer is exposed may be prevented in a peel test. Therefore, according to an embodiment of the present disclosure, it is possible to implement a pouch film for a secondary battery capable of satisfying both physical property requirements required for the pouch film in an electrolyte environment and a high-temperature environment and physical property requirements required for a pouch film bonded body after the sealing step.

Two test methods that may be performed on the pouch film for a secondary battery will be described below.

<First Test Method>: After the pouch film for a secondary battery is immersed in an electrolyte for a predetermined period of time, the pouch film for a secondary battery may be taken out of the electrolyte and put into a high-temperature chamber, and a peel strength between the metal barrier layer and the sealant layer may be measured in the high-temperature chamber. For example, after a sample obtained by cutting the pouch film for a secondary battery to a size of 25 mm × 150 mm is immersed (impregnated) in an electrolyte (standard electrolyte) for 1 day (that is, 24 hours) under a temperature condition of 85°C ± 2°C, the film sample may be taken out of the electrolyte, put into a high-temperature chamber at 80°C, left for 5 minutes, and then a peel strength between the metal barrier layer and the sealant layer may be measured in the high-temperature chamber by using a UTM (universal testing machine). At the time of the measurement, the sample is measured within 1 hour after being taken out of the electrolyte. The measurement may be performed in a state in which a full scale of a tensile strength tester is set to be about 50% higher than an expected strength of the sample. Such a test measures chemical resistance (electrolyte resistance characteristics), heat resistance (temperature resistance), and peel strength (peel strength between the metal barrier layer and the sealant layer) of the pouch film, and delamination is required to occur between the metal barrier layer and the sealant layer, and delamination occurring in a middle (interlayer) of the sealant layer is required to be prevented. A case in which delamination occurs only between the metal barrier layer and the sealant layer is a suitable (OK) case, and a case in which delamination occurs in the middle (interlayer) of the sealant layer is an unsuitable (NG = no good) case, and the peel strength between the metal barrier layer and the sealant layer is required to be at or above a predetermined level (for example, 15 N/15 mm). The above-described test may be referred to as a "first test," and this may be a delamination test on the pouch film itself under electrolyte immersion and high-temperature conditions.

<Second Test Method>: After thermal bonding between the sealant layer and the sealant layer of the pouch film for a secondary battery, peel strength therebetween may be measured. After sealing a pouch film sample cut to a size of about 15 mm × 150 mm such that the sealant layers are in contact with each other, peel strength of a sealing surface, that is, peel strength between the sealant layers, may be measured by using a tensile strength tester (that is, a UTM). Here, conditions of the sealing (that is, conditions of the thermal bonding) may be a temperature of 180°C ± 2°C, a pressure of 30 kgf/cm², and a time of 3.0 seconds. Peel strength of the sealing surface may be measured by using the tensile strength tester. The measurement may be performed in a state in which a full scale of the tensile strength tester is set to be about 50% higher than an expected strength of the sample. In this case, the test may be performed after fixing an unbonded first sample portion and an unbonded second sample portion to the tensile strength tester (that is, the UTM apparatus). A pouch film bonded body formed by the bonding is required to have peel strength of a reference level (specification) or more, (peel strength between the pouch films), and a delamination phenomenon in which the metal barrier layer is exposed is required to be prevented in the peel test. A case in which delamination occurs inside the sealant layer, including on an upper surface or a lower surface of the main layer, is a suitable (OK) case, and a case in which delamination exposing the metal barrier layer occurs is an unsuitable (NG) case. The above-described test may be referred to as a "second test," and this may be a peel test between pouch films after a sealing step. The above-described second test method is illustrated in FIG. 2, but embodiments of the present disclosure are not limited thereto.

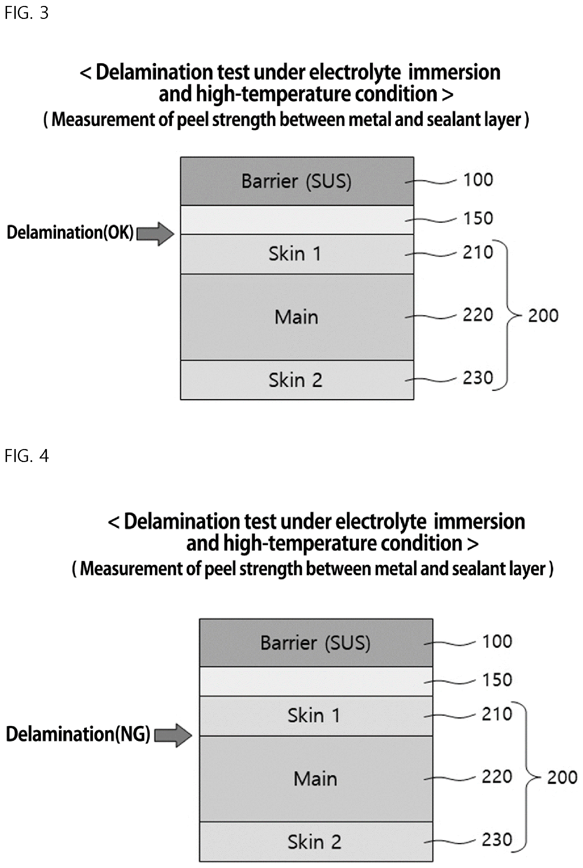

FIG. 3 is a cross-sectional view illustrating a delamination aspect corresponding to a suitable (OK) case in an electrolyte immersion and high-temperature condition delamination test (the first test) on the pouch film for a secondary battery according to an embodiment of the present disclosure.

Referring to FIG. 3, in the electrolyte immersion and high-temperature condition delamination test (the first test), a case in which delamination occurs only between the metal barrier layer (100) and the sealant layer (200) may be a suitable (OK) case. Through this, peel strength between the metal barrier layer (100) and the sealant layer (200) may be measured. According to the delamination, the first skin layer (210) may be separated from the adhesive layer (150), and the adhesive layer (150) may remain on one surface of the metal barrier layer (100). However, in some cases, as the adhesive layer (150) is separated from the metal barrier layer (100), delamination between the metal barrier layer (100) and the sealant layer (200) may occur.

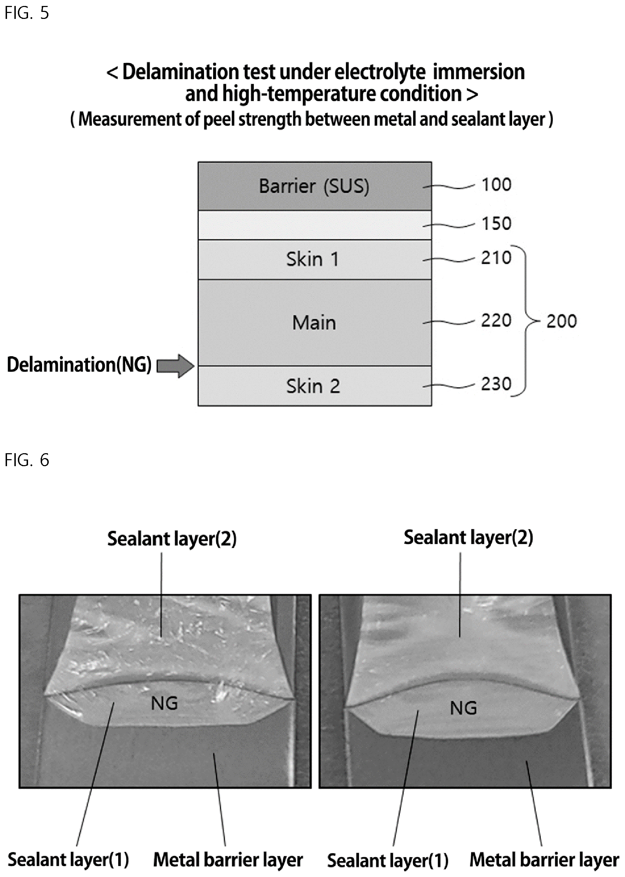

FIGS. 4 and 5 are cross-sectional views illustrating delamination aspects corresponding to unsuitable (NG) cases in an electrolyte immersion and high-temperature condition delamination test (the first test) on the pouch film for a secondary battery.

Referring to FIGS. 4 and 5, in the electrolyte immersion and high-temperature condition delamination test (the first test), a case in which delamination occurs in a middle (interlayer) of the sealant layer (200) may be an unsuitable (NG) case. As illustrated in FIG. 4, a case in which delamination occurs between the first skin layer (210) and the main layer (220), or, as illustrated in FIG. 5, a case in which delamination occurs between the main layer (220) and the second skin layer (230), may be an unsuitable (NG) case. When the sealant layer (200) does not have sufficient resistance characteristics to an electrolyte environment and a high-temperature environment, delamination may occur in the middle (interlayer) of the sealant layer (200).

FIG. 6 is a photographic image illustrating a case in which delamination corresponding to an unsuitable (NG) case has occurred in an electrolyte immersion and high-temperature condition delamination test (the first test) on the pouch film for a secondary battery.

Referring to FIG. 6, it can be seen that the sealant layer has been separated (delaminated) into two layer portions. Here, sealant layer (1) indicates a first layer portion of the sealant layer, and sealant layer (2) indicates a second layer portion of the same sealant layer.

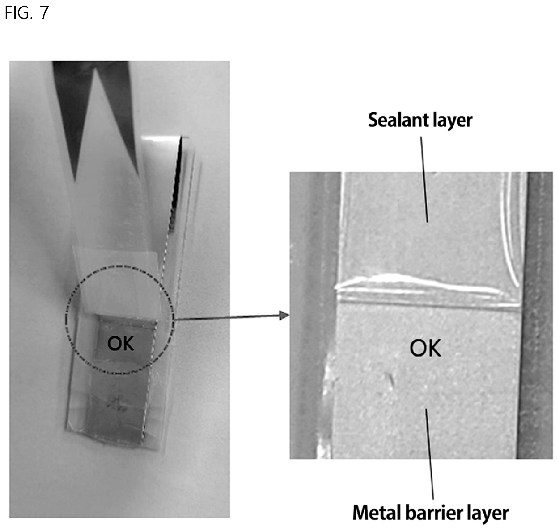

FIG. 7 is a photographic image illustrating a case in which delamination corresponding to a suitable (OK) case has occurred in an electrolyte immersion and high-temperature condition delamination test (the first test) on the pouch film for a secondary battery according to an embodiment of the present disclosure.

Referring to FIG. 7, the sealant layer may be separated (delaminated) from the metal barrier layer while maintaining one layer structure as it is. In other words, a phenomenon in which delamination occurs in the middle (interlayer) of the sealant layer may not occur during the test.

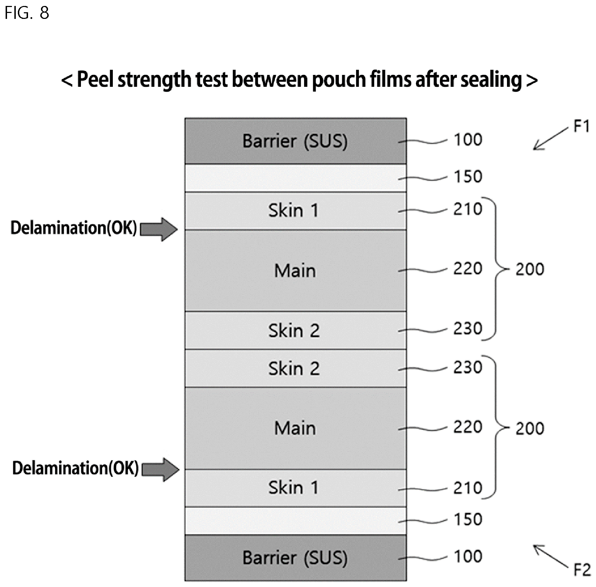

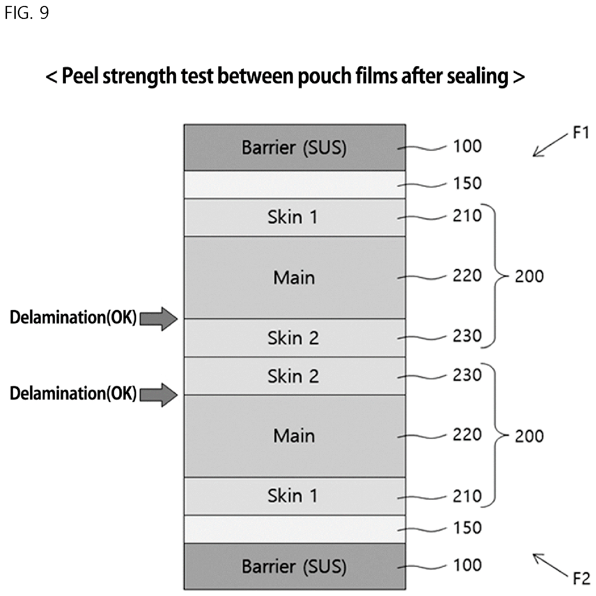

FIGS. 8 and 9 are cross-sectional views illustrating delamination aspects corresponding to suitable (OK) cases in a peel test between pouch films after sealing (the second test) on the pouch film for a secondary battery according to an embodiment of the present disclosure.

Referring to FIGS. 8 and 9, after performing a sealing process of bonding two pouch films (F1, F2) for a secondary battery to each other, delamination characteristics between the bonded pouch films (F1, F2) may be evaluated. In this case, a case in which delamination occurs inside the sealant layer (200), including on an upper surface or a lower surface of the main layer (220), may be a suitable (OK) case. As illustrated in FIG. 8, delamination may occur between the first skin layer (210) and the main layer (220), or, as illustrated in FIG. 9, delamination may occur between the second skin layer (230) and the main layer (220). After the sealing step, in the peel test between the pouch films, it may be preferable that delamination exposing the metal barrier layer (100) does not occur.

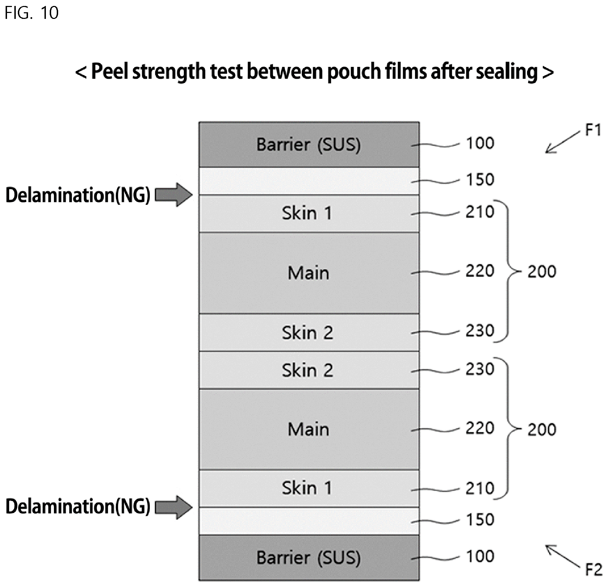

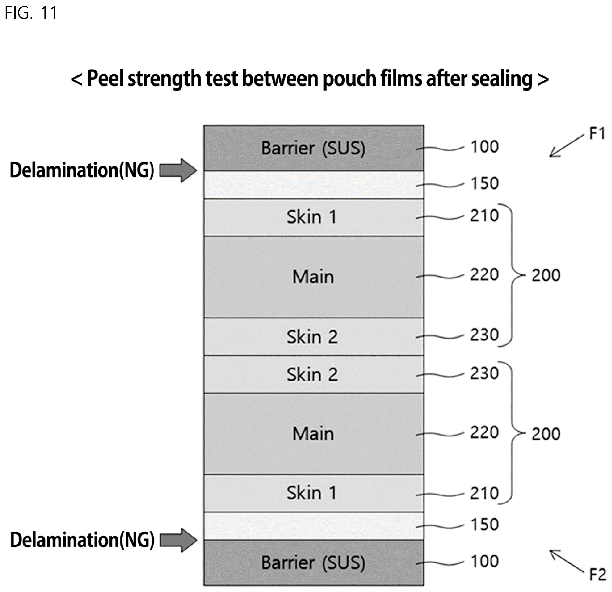

FIGS. 10 and 11 are cross-sectional views illustrating delamination aspects corresponding to unsuitable (NG) cases in a peel test between pouch films after sealing (the second test) on the pouch film for a secondary battery.

Referring to FIGS. 10 and 11, in the test after the sealing step, a case in which delamination exposing the metal barrier layer (100) occurs may be an unsuitable (NG) case. A case in which separation (delamination) occurs between the first skin layer (210) and the adhesive layer

(150) (FIG. 10), or a case in which separation (delamination) occurs between the metal barrier layer (100) and the adhesive layer (150) (FIG. 11), may both be regarded as cases in which the metal barrier layer (100) is exposed, and may be unsuitable. When the metal barrier layer (100) is exposed, reliability of the secondary battery may be reduced, and safety may be seriously compromised due to damage to or explosion of the secondary battery.

Hereinafter, with reference to Tables 1 to 6 and the like, test results for pouch films according to specific examples and comparative examples will be described.

Table 1 below summarizes results of the above-described first and second tests on pouch films according to specific examples and comparative examples.

**[Table 1]**

| Category | Elastomer Content by Layer (wt%) | Delamination Mode under Electrolyte + High-Temperature Conditions (First Test) | Delamination Mode after Sealing (Second Test) |
|---|---|---|---|
| Comparative Example 1 | Skin-1 layer 3% / Main layer 10% / Skin-2 layer 7% | Delamination between Skin 1 layer and Main layer (NG) | Main-layer delamination (OK) |
| Comparative Example 2 | Skin-1 layer 3.4% / Main layer 10% / Skin-2 layer 7% | Delamination between Skin 1 layer and Main layer (NG) | Main-layer delamination (OK) |
| Comparative Example 3 | Skin-1 layer 3.7% / Main layer 10% / Skin-2 layer 7% | Delamination between Skin 1 layer and Main layer (NG) | Main-layer delamination (OK) |
| Comparative Example 4 | Skin-1 layer 4% / Main layer 10% / Skin-2 layer 7% | Delamination between Skin 1 layer and Main layer (NG) | Main-layer delamination (OK) |
| Comparative Example 5 | Skin-1 layer 4.4% / Main layer 10% / Skin-2 layer 7% | Delamination between Skin 1 layer and Main layer (NG) | Main-layer delamination (OK) |
| Comparative Example 6 | Skin-1 layer 4.7% / Main layer 10% / Skin-2 layer 7% | Delamination between Skin 1 layer and Main layer (NG) | Main-layer delamination (OK) |
| Comparative Example 7 | Skin-1 layer 5% / Main layer 10% / Skin-2 layer 7% | Delamination between Skin 1 layer and Main layer (NG) | Main-layer delamination (OK) |
| Comparative Example 8 | Skin-1 layer 5.4% / Main layer 10% / Skin-2 layer 7% | Delamination between Skin 1 layer and Main layer (NG) | Main-layer delamination (OK) |
| Comparative Example 9 | Skin-1 layer 5.7% / Main layer 10% / Skin-2 layer 7% | Delamination between Skin 1 layer and Main layer (NG) | Main-layer delamination (OK) |
| Comparative Example 10 | Skin-1 layer 6% / Main layer 10% / Skin-2 layer 7% | Delamination between Skin 1 layer and Main layer (NG) | Main-layer delamination (OK) |
| Comparative Example 11 | Skin-1 layer 6.4% / Main layer 10% / Skin-2 layer 7% | Delamination between Skin 1 layer and Main layer (NG) | Main-layer delamination (OK) |
| Example 1 | Skin-1 layer 6.7% / Main layer 10% / Skin-2 layer 7% | No interlayer delamination (OK) | Main-layer delamination (OK) |
| Example 2 | Skin-1 layer 7% / Main layer 10% / Skin-2 layer 7% | No interlayer delamination (OK) | Main-layer delamination (OK) |
| Example 3 | Skin-1 layer 7.4% / Main layer 10% / Skin-2 layer 7% | No interlayer delamination (OK) | Main-layer delamination (OK) |
| Comparative Example 12 | Skin-1 layer 7.7% / Main layer 10% / Skin-2 layer 7% | No interlayer delamination (OK) | Exposure of SUS surface (NG) |
| Comparative Example 13 | Skin-1 layer 8% / Main layer 10% / Skin-2 layer 7% | No interlayer delamination (OK) | Exposure of SUS surface (NG) |
| Comparative Example 14 | Skin-1 layer 8.4% / Main layer 10% / Skin-2 layer 7% | No interlayer delamination (OK) | Exposure of SUS surface (NG) |
| Comparative Example 15 | Skin-1 layer 8.7% / Main layer 10% / Skin-2 layer 7% | No interlayer delamination (OK) | Exposure of SUS surface (NG) |

Referring to Table 1, only Examples 1 to 3 were evaluated as being suitable (OK) in both the first test and the second test. In Example 1, the elastomer content of the first skin layer was 6.7 wt%, the elastomer content of the main layer was 10 wt%, and the elastomer content of the second skin layer was 7 wt%. In Example 2, the elastomer content of the first skin layer was 7 wt%, the elastomer content of the main layer was 10 wt%, and the elastomer content of the second skin layer was 7 wt%. In Example 3, the elastomer content of the first skin layer was 7.4 wt%, the elastomer content of the main layer was 10 wt%, and the elastomer content of the second skin layer was 7 wt%. In this case, the metal barrier layer was an SUS layer, and the thermal conductivity thereof was 15 W/m-k or more. In all examples and comparative examples of Table 1, formability and insulation resistance characteristics were evaluated as being suitable. In the sealant layer, the first skin layer was configured such that a sum of random polypropylene, ter-polypropylene, and block polypropylene was in a range of 50 wt% to 90 wt%, and an ethylene propylene rubber (EPR)-based elastomer was used in an amount of a given wt% based on a total composition of the first skin layer. The main layer was configured such that a sum of homo polypropylene and block polypropylene was in a range of 10 wt% to 90 wt%, and an ethylene propylene rubber (EPR)-based elastomer was used in an amount of 10 wt%. The second skin layer was configured such that a sum of homo polypropylene, random polypropylene, ter-polypropylene, and block polypropylene (or a sum of homo polypropylene and block polypropylene) was in a range of 10 wt% to 90 wt%, and an ethylene propylene rubber (EPR)-based elastomer was used in an amount of a given wt% based on the total composition of the second skin layer.

Meanwhile, in all examples and comparative examples of Table 1, the first skin layer, the main layer, and the second skin layer were all CPP-based films, and this is the same in Tables 2 to 6 to be described below. In addition, in all examples and comparative examples, a thickness of the metal barrier layer was 60 µm, a thickness of the adhesive layer was 3.5 µm, and a thickness of the sealant layer was 80 µm, and this is the same in Tables 2 to 6 to be described below.

Table 2 below summarizes results of the above-described first and second tests on pouch films according to specific examples and comparative examples.

**[Table 2]**

| Category | Elastomer Content by Layer (wt%) | Delamination Mode under Electrolyte + High-Temperature Conditions (First Test) | Delamination Mode after Sealing (Second Test) |
|---|---|---|---|
| Comparative Example 16 | Skin-1 layer 7% / Main layer 10% / Skin-2 layer 3.4% | Delamination between Skin 2 layer and Main layer (NG) | Main-layer delamination (OK) |
| Comparative Example 17 | Skin-1 layer 7% / Main layer 10% / Skin-2 layer 3.7% | Delamination between Skin 2 layer and Main layer (NG) | Main-layer delamination (OK) |
| Comparative Example 18 | Skin-1 layer 7% / Main layer 10% / Skin-2 layer 4% | Delamination between Skin 2 layer and Main layer (NG) | Main-layer delamination (OK) |
| Comparative Example 19 | Skin-1 layer 7% / Main layer 10% / Skin-2 layer 4.4% | Delamination between Skin 2 layer and Main layer (NG) | Main-layer delamination (OK) |
| Comparative Example 20 | Skin-1 layer 7% / Main layer 10% / Skin-2 layer 4.7% | Delamination between Skin 2 layer and Main layer (NG) | Main-layer delamination (OK) |
| Comparative Example 21 | Skin-1 layer 7% / Main layer 10% / Skin-2 layer 5% | Delamination between Skin 2 layer and Main layer (NG) | Main-layer delamination (OK) |
| Comparative Example 22 | Skin-1 layer 7% / Main layer 10% / Skin-2 layer 5.4% | Delamination between Skin 2 layer and Main layer (NG) | Main-layer delamination (OK) |
| Comparative Example 23 | Skin-1 layer 7% / Main layer 10% / Skin-2 layer 5.7% | Delamination between Skin 2 layer and Main layer (NG) | Main-layer delamination (OK) |
| Comparative Example 24 | Skin-1 layer 7% / Main layer 10% / Skin-2 layer 6% | Delamination between Skin 2 layer and Main layer (NG) | Main-layer delamination (OK) |
| Comparative Example 25 | Skin-1 layer 7% / Main layer 10% / Skin-2 layer 6.4% | Delamination between Skin 2 layer and Main layer (NG) | Main-layer delamination (OK) |
| Example 4 | Skin-1 layer 7% / Main layer 10% / Skin-2 layer 6.7% | No interlayer delamination (OK) | Main-layer delamination (OK) |
| Example 5 | Skin-1 layer 7% / Main layer 10% / Skin-2 layer 7% | No interlayer delamination (OK) | Main-layer delamination (OK) |
| Example 6 | Skin-1 layer 7% / Main layer 10% / Skin-2 layer 7.4% | No interlayer delamination (OK) | Main-layer delamination (OK) |
| Comparative Example 26 | Skin-1 layer 7% / Main layer 10% / Skin-2 layer 7.7% | No interlayer delamination (OK) | Exposure of SUS surface (NG) |
| Comparative Example 27 | Skin-1 layer 7% / Main layer 10% / Skin-2 layer 8% | No interlayer delamination (OK) | Exposure of SUS surface (NG) |
| Comparative Example 28 | Skin-1 layer 7% / Main layer 10% / Skin-2 layer 8.3% | No interlayer delamination (OK) | Exposure of SUS surface (NG) |
| Comparative Example 29 | Skin-1 layer 7% / Main layer 10% / Skin-2 layer 8.7% | No interlayer delamination (OK) | Exposure of SUS surface (NG) |

Referring to Table 2, only Examples 4 to 6 were evaluated as being suitable (OK) in both the first test and the second test. In Example 4, the elastomer content of the first skin layer was 7 wt%, the elastomer content of the main layer was 10 wt%, and the elastomer content of the second skin layer was 6.7 wt%. In Example 5, the elastomer content of the first skin layer was 7 wt%, the elastomer content of the main layer was 10 wt%, and the elastomer content of the second skin layer was 7 wt%. In Example 6, the elastomer content of the first skin layer was 7 wt%, the elastomer content of the main layer was 10 wt%, and the elastomer content of the second skin layer was 7.4 wt%. Example 5 may be substantially identical to Example 2. The metal barrier layer was an SUS layer, and the thermal conductivity thereof was 15 W/m·k or more. In all examples and comparative examples of Table 2, formability and insulation resistance characteristics were evaluated as being suitable. Table 3 below summarizes results of the above-described first and second tests on pouch films according to specific examples and comparative examples.

**[Table 3]**

| Category | Elastomer Content by Layer (wt%) | Delamination Mode under Electrolyte + High-Temperature Conditions (First Test) | Delamination Mode after Sealing (Second Test) | Formability | Insulation Resistance |
|---|---|---|---|---|---|
| Comparative Example 30 | Skin-1 layer 7.04% / Main layer 11% / Skin-2 layer 7.7% | Delamination between Skin 1 layer and Main layer (NG) | Main-layer delamination (OK) | NG | OK |
| Example 7 | Skin-1 layer 7.7% / Main layer 11% / Skin-2 layer 7.7% | No interlayer delamination (OK) | Main-layer delamination (OK) | OK | OK |
| Comparative Example 31 | Skin-1 layer 8.47% / Main layer 11% / Skin-2 layer 7.7% | No interlayer delamination (OK) | Exposure of SUS surface (NG) | OK | OK |
| Comparative Example 32 | Skin-1 layer 7.68% / Main layer 12% / Skin-2 layer 8.4% | Delamination between Skin 1 layer and Main layer (NG) | Main-layer delamination (OK) | OK | OK |
| Example 8 | Skin-1 layer 8.4% / Main layer 12% / Skin-2 layer 8.4% | No interlayer delamination (OK) | Main-layer delamination (OK) | OK | OK |
| Comparative Example 33 | Skin-1 layer 9.24% / Main layer 12% / Skin-2 layer 8.4% | No interlayer delamination (OK) | Exposure of SUS surface (NG) | OK | OK |
| Comparative Example 34 | Skin-1 layer 8.32% / Main layer 13% / Skin-2 layer 9.1% | Delamination between Skin 1 layer and Main layer (NG) | Main-layer delamination (OK) | OK | OK |
| Example 9 | Skin-1 layer 9.1% / Main layer 13% / Skin-2 layer 9.1% | No interlayer delamination (OK) | Main-layer delamination (OK) | OK | OK |
| Comparative Example 35 | Skin-1 layer 10.1% / Main layer 13% / Skin-2 layer 9.1% | No interlayer delamination (OK) | Exposure of SUS surface (NG) | OK | OK |
| Comparative Example 36 | Skin-1 layer 8.96% / Main layer 14% / Skin-2 layer 9.8% | Delamination between Skin 1 layer and Main layer (NG) | Main-layer delamination (OK) | OK | OK |
| Example 10 | Skin-1 layer 9.8% / Main layer 14% / Skin-2 layer 9.8% | No interlayer delamination (OK) | Main-layer delamination (OK) | OK | OK |
| Comparative Example 37 | Skin-1 layer 10.78% / Main layer 14% / Skin-2 layer 9.8% | No interlayer delamination (OK) | Exposure of SUS surface (NG) | OK | OK |
| Comparative Example 38 | Skin-1 layer 9.6% / Main layer 15% / Skin-2 layer 10.5% | Delamination between Skin 1 layer and Main layer (NG) | Main-layer delamination (OK) | OK | OK |
| Example 11 | Skin-1 layer 10.5% / Main layer 15% / Skin-2 layer 10.5% | No interlayer delamination (OK) | Main-layer delamination (OK) | OK | OK |
| Comparative Example 39 | Skin-1 layer 11.55% / Main layer 15% / Skin-2 layer 10.5% | No interlayer delamination (OK) | Exposure of SUS surface (NG) | OK | NG |

Referring to Table 3, in the case of Examples 7 to 11, all were evaluated as being suitable (OK) in both the first test and the second test. In Examples 7 to 11, an elastomer content of the first skin layer, an elastomer content of the main layer, and an elastomer content of the second skin layer may be identified. In this case, the metal barrier layer was an SUS layer, and the thermal conductivity thereof was 15 W/m·k or more. In the case of Comparative Example 30, a sum of the elastomer content of the main layer, the elastomer content of the first skin layer, and the elastomer content of the second skin layer was 25.74 wt%, and in this case, formability characteristics were unsuitable. In the case of Comparative Example 39, a sum of the elastomer content of the main layer, the elastomer content of the first skin layer, and the elastomer content of the second skin layer was 37.05 wt%, and in this case, insulation resistance characteristics were unsuitable. When the sum of the elastomer content in the sealant layer is too small, formability may be deteriorated, and when the sum of the elastomer content is too large, it may adversely affect insulation resistance characteristics. In an embodiment of the present disclosure, the sum of the elastomer content of the main layer, the first skin layer, and the second skin layer may be, for example, in a range of about 26 wt% to 37 wt%.

Table 4 below summarizes results of the above-described first and second tests on pouch films according to specific examples and comparative examples.

**[Table 4]**

| Category | Elastomer Content by Layer (wt%) | Delamination Mode under Electrolyte + High-Temperature Conditions (First Test) | Delamination Mode after Sealing (Second Test) | Formability | Insulation Resistance |
|---|---|---|---|---|---|
| Example 12 | Skin-1 layer 7.4% / Main layer 11% / Skin-2 layer 7.7% | No interlayer delamination (OK) | Main-layer delamination (OK) | OK | OK |
| Example 13 | Skin-1 layer 7.7% / Main layer 11% / Skin-2 layer 7.4% | No interlayer delamination (OK) | Main-layer delamination (OK) | OK | OK |
| Example 14 | Skin-1 layer 8% / Main layer 11% / Skin-2 layer 7.7% | No interlayer delamination (OK) | Main-layer delamination (OK) | OK | OK |
| Example 15 | Skin-1 layer 7.7% / Main layer 11% / Skin-2 layer 8% | No interlayer delamination (OK) | Main-layer delamination (OK) | OK | OK |
| Example 16 | Skin-1 layer 8% / Main layer 12% / Skin-2 layer 8.4% | No interlayer delamination (OK) | Main-layer delamination (OK) | OK | OK |
| Example 17 | Skin-1 layer 8.4% / Main layer 12% / Skin-2 layer 8% | No interlayer delamination (OK) | Main-layer delamination (OK) | OK | OK |
| Example 18 | Skin-1 layer 8.7% / Main layer 12% / Skin-2 layer 8.4% | No interlayer delamination (OK) | Main-layer delamination (OK) | OK | OK |
| Example 19 | Skin-1 layer 8.4% / Main layer 12% / Skin-2 layer 8.7% | No interlayer delamination (OK) | Main-layer delamination (OK) | OK | OK |
| Example 20 | Skin-1 layer 8.8% / Main layer 13% / Skin-2 layer 9.1% | No interlayer delamination (OK) | Main-layer delamination (OK) | OK | OK |
| Example 21 | Skin-1 layer 9.1% / Main layer 13% / Skin-2 layer 8.8% | No interlayer delamination (OK) | Main-layer delamination (OK) | OK | OK |
| Example 22 | Skin-1 layer 9.4% / Main layer 13% / Skin-2 layer 9.1% | No interlayer delamination (OK) | Main-layer delamination (OK) | OK | OK |
| Example 23 | Skin-1 layer 9.1% / Main layer 13% / Skin-2 layer 9.4% | No interlayer delamination (OK) | Main-layer delamination (OK) | OK | OK |
| Example 24 | Skin-1 layer 10.2% / Main layer 15% / Skin-2 layer 10.5% | No interlayer delamination (OK) | Main-layer delamination (OK) | OK | OK |
| Example 25 | Skin-1 layer 10.5% / Main layer 15% / Skin-2 layer 10.2% | No interlayer delamination (OK) | Main-layer delamination (OK) | OK | OK |
| Example 26 | Skin-1 layer 10.8% / Main layer 15% / Skin-2 layer 10.5% | No interlayer delamination (OK) | Main-layer delamination (OK) | OK | OK |
| Example 27 | Skin-1 layer 10.5% / Main layer 15% / Skin-2 layer 10.8% | No interlayer delamination (OK) | Main-layer delamination (OK) | OK | OK |

Referring to Table 4, in the case of Examples 12 to 27, all were evaluated as being suitable (OK) in both the first test and the second test. In Examples 12 to 27, an elastomer content of the first skin layer, an elastomer content of the main layer, and an elastomer content of the second skin layer may be identified. In this case, the metal barrier layer was an SUS layer, and the thermal conductivity thereof was 15 W/m·k or more. In all examples of Table 4, formability and insulation resistance characteristics were evaluated as being suitable. From the results of Tables 1 to 4 described above, in the case of Examples 1 to 27, a ratio (A:B) of the elastomer content (A) of the main layer to the elastomer content (B) of the first skin layer may be in a range of about 1:0.67 to 1:0.74. In addition, a ratio (A:C) of the elastomer content (A) of the main layer to the elastomer content (C) of the second skin layer may be in a range of about 1:0.67 to 1:0.74. In a ratio (A:B:C) of the elastomer content (A) of the main layer, the elastomer content (B) of the first skin layer, and the elastomer content (C) of the second skin layer, A may be 1, B may range from about 0.67 to about 0.74, and C may range from about 0.67 to about 0.74. When these conditions are satisfied, chemical resistance, heat resistance, delamination resistance, and durability of the pouch film according to the embodiment may be improved. In addition, in the case of Examples 1 to 27, the elastomer content of the main layer may be in a range of about 10 wt% to 15 wt%, the elastomer content of the first skin layer may be in a range of about 6.7 wt% to 10.8 wt%, and the elastomer content of the second skin layer may be in a range of about 6.7 wt% to 10.8 wt%. Under these content range conditions, a ratio (A:B:C) of the elastomer content (A) of the main layer, the elastomer content (B) of the first skin layer, and the elastomer content (C) of the second skin layer may satisfy a condition of 1:0.67 to 0.74:0.67 to 0.74. However, the above-described elastomer content range conditions of the respective layers (the main layer, the first skin layer, and the second skin layer) may vary depending on circumstances.

Table 5 below summarizes results of the above-described first and second tests on pouch films according to specific examples and comparative examples. In Table 5, the influence of thermal conductivity was evaluated by performing the test while varying the thermal conductivity of the SUS layer applied to the metal barrier layer.

**[Table 5]**

| Category | Elastomer Content by Layer (wt%) | SUS Thermal Conductivity (W/m·k) | Delamination Mode under Electrolyte + High-Temperature Conditions (First Test) | Delamination Mode after Sealing (Second Test) |
|---|---|---|---|---|
| Example 28 | Skin-1 layer 6.7% / Main layer 10% / Skin-2 layer 7% | 20 | No interlayer delamination (OK) | Main-layer delamination (OK) |
| Comparative Example 40 | Skin-1 layer 6.7% / Main layer 10% / Skin-2 layer 7% | 10 | No interlayer delamination (OK) | Sealing failure (NG) |
| Comparative Example 41 | Skin-1 layer 6.7% / Main layer 10% / Skin-2 layer 7% | 13 | No interlayer delamination (OK) | Sealing failure (NG) |
| Example 29 | Skin-1 layer 6.7% / Main layer 10% / Skin-2 layer 7% | 15 | No interlayer delamination (OK) | Main-layer delamination (OK) |
| Example 30 | Skin-1 layer 7% / Main layer 10% / Skin-2 layer 7% | 20 | No interlayer delamination (OK) | Main-layer delamination (OK) |
| Comparative Example 42 | Skin-1 layer 7% / Main layer 10% / Skin-2 layer 7% | 10 | No interlayer delamination (OK) | Sealing failure (NG) |
| Example 31 | Skin-1 layer 7.4% / Main layer 10% / Skin-2 layer 7% | 20 | No interlayer delamination (OK) | Main-layer delamination (OK) |
| Comparative Example 43 | Skin-1 layer 7.4% / Main layer 10% / Skin-2 layer 7% | 10 | No interlayer delamination (OK) | Sealing failure (NG) |
| Example 32 | Skin-1 layer 7% / Main layer 10% / Skin-2 layer 6.7% | 20 | No interlayer delamination (OK) | Main-layer delamination (OK) |
| Comparative Example 44 | Skin-1 layer 7% / Main layer 10% / Skin-2 layer 6.7% | 10 | No interlayer delamination (OK) | Sealing failure (NG) |
| Example 33 | Skin-1 layer 7% / Main layer 10% / Skin-2 layer 7% | 20 | No interlayer delamination (OK) | Main-layer delamination (OK) |
| Comparative Example 45 | Skin-1 layer 7% / Main layer 10% / Skin-2 layer 7% | 10 | No interlayer delamination (OK) | Sealing failure (NG) |
| Example 34 | Skin-1 layer 7% / Main layer 10% / Skin-2 layer 7.4% | 20 | No interlayer delamination (OK) | Main-layer delamination (OK) |
| Comparative Example 46 | Skin-1 layer 7% / Main layer 10% / Skin-2 layer 7.4% | 10 | No interlayer delamination (OK) | Sealing failure (NG) |
| Comparative Example 47 | Skin-1 layer 7% / Main layer 10% / Skin-2 layer 7.4% | 13 | No interlayer delamination (OK) | Sealing failure (NG) |
| Example 35 | Skin-1 layer 7% / Main layer 10% / Skin-2 layer 7.4% | 15 | No interlayer delamination (OK) | Main-layer delamination (OK) |

Referring to Table 5, the metal barrier layer was an SUS layer, and in the case of Examples 28 to 35, in which the thermal conductivity of the SUS layer was 15 W/m·k or more, all were evaluated as being suitable (OK) in both the first test and the second test. Accordingly, when the metal barrier layer is formed of stainless steel (SUS) having a thermal conductivity of 15 W/m·k or more, or includes the same, more desirable test results may be obtained. The thermal conductivity of the stainless steel (SUS) applied to the examples may be about 15 W/m·k to 30 W/m·k, or about 15 W/m·k to 25 W/m·k. In Examples 28 to 35, an elastomer content of the first skin layer, an elastomer content of the main layer, and an elastomer content of the second skin layer may be identified. Table 6 below summarizes results of the above-described first and second tests on pouch films according to specific examples and comparative examples. In Table 6, the influence of the melting temperature (Tm) of the adhesive layer was evaluated by performing the test while varying the melting temperature (Tm) of the adhesive layer.

**[Table 6]**

| Category | Adhesive Tm / Elastomer Content by Layer (wt%) | Delamination Mode under Electrolyte + High-Temperature Conditions (First Test) | Peel Strength (N/15 mm) | Delamination Mode after Sealing (Second Test) |
|---|---|---|---|---|
| Comparative Example 48 | SUS Metal / Adhesive Tm 120 / Skin-1 layer 7% / Main layer 10% / Skin-2 layer 3% | Delamination between Skin 2 layer and Main layer (NG) | 13 (NG) | Main-layer delamination (OK) |
| Comparative Example 49 | SUS Metal / Adhesive Tm 120 / Skin-1 layer 7% / Main layer 10% / Skin-2 layer 7% | No interlayer delamination (OK) | 13 (NG) | Main-layer delamination (OK) |
| Comparative Example 50 | SUS Metal / Adhesive Tm 130 / Skin-1 layer 7% / Main layer 10% / Skin-2 layer 7% | No interlayer delamination (OK) | 14 (NG) | Main-layer delamination (OK) |
| Comparative Example 51 | SUS Metal / Adhesive Tm 140 / Skin-1 layer 7% / Main layer 10% / Skin-2 layer 3% | Delamination between Skin 2 layer and Main layer (NG) | 17 | Main-layer delamination (OK) |
| Example 36 | SUS Metal / Adhesive Tm 140 / Skin-1 layer 7% / Main layer 10% / Skin-2 layer 7% | No interlayer delamination (OK) | 17 | Main-layer delamination (OK) |
| Comparative Example 52 | SUS Metal / Adhesive Tm 140 / Skin-1 layer 7% / Main layer 10% / Skin-2 layer 8% | No interlayer delamination (OK) | 17 | Exposure of SUS surface (NG) |
| Comparative Example 53 | SUS Metal / Adhesive Tm 160 / Skin-1 layer 7% / Main layer 10% / Skin-2 layer 3% | Delamination between Skin 2 layer and Main layer (NG) | 18 | Main-layer delamination (OK) |
| Example 37 | SUS Metal / Adhesive Tm 160 / Skin-1 layer 7% / Main layer 10% / Skin-2 layer 7% | No interlayer delamination (OK) | 18 | Main-layer delamination (OK) |
| Comparative Example 54 | SUS Metal / Adhesive Tm 160 / Skin-1 layer 7% / Main layer 10% / Skin-2 layer 8% | No interlayer delamination (OK) | 18 | Exposure of SUS surface (NG) |
| Comparative Example 55 | SUS Metal / Adhesive Tm 180 / Skin-1 layer 7% / Main layer 10% / Skin-2 layer 3% | Delamination between Skin 2 layer and Main layer (NG) | 20 | Main-layer delamination (OK) |
| Example 38 | SUS Metal / Adhesive Tm 180 / Skin-1 layer 7% / Main layer 10% / Skin-2 layer 7% | No interlayer delamination (OK) | 20 | Main-layer delamination (OK) |
| Comparative Example 56 | SUS Metal / Adhesive Tm 180 / Skin-1 layer 7% / Main layer 10% / Skin-2 layer 8% | No interlayer delamination (OK) | 20 | Exposure of SUS surface (NG) |
| Comparative Example 57 | SUS Metal / Adhesive Tm 200 / Skin-1 layer 7% / Main layer 10% / Skin-2 layer 8% | No interlayer delamination (OK) | 14 (NG) | Exposure of SUS surface (NG) |

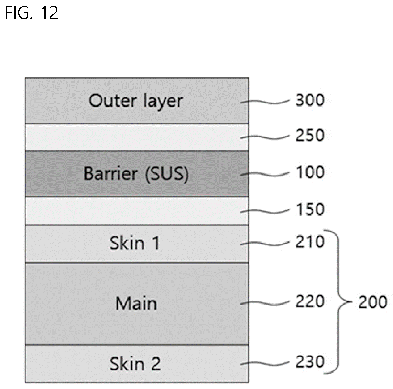

Referring to Table 6, in the case of Examples 36 to 38, which correspond to cases in which a melting temperature (Tm) of the adhesive layer (adhesive) is 140°C or more, all were evaluated as being suitable (OK) in both the first test and the second test while satisfying a peel strength condition. Here, the peel strength indicates peel strength in the first test, that is, peel strength between the metal barrier layer and the sealant layer, and a case in which the peel strength is 15 N/15 mm or more may be a suitable (OK) case. In the case of Comparative Examples 49 and 50, the melting temperature (Tm) of the adhesive layer (adhesive) is less than 140°C, and in this case, it was checked that the peel strength condition was not satisfied. In the pouch film according to an embodiment of the present disclosure, it may be preferable that the melting temperature (Tm) of the adhesive layer is 140°C or more. The melting temperature (Tm) of the adhesive layer may be, for example, about 140°C to 200°C, or about 140°C to 180°C. In Table 6, the metal barrier layer was an SUS layer, and the thermal conductivity thereof was 15 W/m·k or more. FIG. 12 is a cross-sectional view illustrating a pouch film for a secondary battery according to an embodiment of the present disclosure.

Referring to FIG. 12, the pouch film for a secondary battery according to an embodiment of the present disclosure may further include an outer layer (300) bonded to the metal barrier layer (100). The metal barrier layer (100) may be disposed between the outer layer (300) and the sealant layer (200). In addition, the pouch film for a secondary battery may further include an adhesive layer (250) disposed between the metal barrier layer (100) and the outer layer (300). The adhesive layer (150) between the metal barrier layer (100) and the sealant layer (200) may be referred to as a first adhesive layer, and the adhesive layer (250) between the metal barrier layer (100) and the outer layer (300) may be referred to as a second adhesive layer.

The outer layer (300) may be disposed on an outer side of the pouch film and may be formed of, as a non-limiting example, one or more materials selected from nylon, a laminated film of nylon and polybutylene terephthalate (PBT), polybutylene terephthalate (PBT), polypropylene (PP). The outer layer (300) may have a single-layer structure or a multilayer structure. The thickness of the outer layer (300) may be, for example, about 1 µm to 100 µm. When the outer layer (300) is excessively thin, it may be difficult to secure sufficient mechanical strength or formability may be deteriorated, and when the outer layer (300) is excessively thick, it may be undesirable in terms of a dielectric breakdown voltage requirement. As a non-limiting example, the thickness of the outer layer (300) may be about 5 µm to 50 µm, or about 10 µm to 30 µm.

According to an embodiment of the present disclosure, a pouch-type secondary battery to which the above-described pouch film for a secondary battery is applied may be provided. In the pouch-type secondary battery, configurations other than the configuration of the pouch film may follow configurations of a general secondary battery. The pouch-type secondary battery may be, for example, a lithium-ion battery. However, a type of the pouch-type secondary battery is not limited to a lithium-ion battery, and may be variously changed. The pouch film according to the embodiments may be applicable to all secondary batteries that may be manufactured in a pouch form.

According to the embodiments of the present disclosure described above, it is possible to implement a pouch film for a secondary battery capable of improving safety and reliability of the secondary battery. According to the embodiments of the present disclosure, it is possible to implement a pouch film for a secondary battery having excellent chemical resistance, heat resistance, delamination resistance, and durability. In particular, according to the embodiments of the present disclosure, it is possible to implement a pouch film for a secondary battery capable of satisfying both physical property requirements required for the pouch film in an electrolyte environment and a high-temperature environment and physical property requirements required for a pouch film bonded body after a sealing step. The pouch film for a secondary battery according to the embodiments may satisfy physical property requirements required in a delamination test on the pouch film under electrolyte immersion and high-temperature conditions and physical property requirements required in a peel test between pouch films after the sealing step. When the pouch film for a secondary battery according to the embodiments is applied, it is possible to manufacture a pouch-type secondary battery having excellent safety, reliability, and durability.

Although preferred embodiments of the present disclosure have been disclosed and specific terms are used in the present specification, these are used only in a general sense for easily describing the technical content of the present disclosure and helping understanding of the present disclosure, and are not intended to limit the scope of the present disclosure. It will be apparent to those skilled in the art that, in addition to the embodiments disclosed herein, other modified examples based on the technical spirit of the present disclosure may be implemented. Those skilled in the art will appreciate that the pouch film for a secondary battery according to the embodiments described with reference to FIGS. 1 to 12, the pouch-type secondary battery to which the same is applied, and related methods may be variously substituted, changed, and modified without departing from the technical spirit of the present disclosure. Accordingly, the scope of the present disclosure should not be defined by the described embodiments, but should be defined by the technical spirit set forth in the claims.

## Claims

1. A pouch film for a secondary battery, the pouch film comprising:
a metal barrier layer; and
a sealant layer bonded to the metal barrier layer with an adhesive layer interposed therebetween,
wherein the sealant layer comprises a first skin layer, a second skin layer, and a main layer disposed therebetween,
wherein the first skin layer, the main layer, and the second skin layer are sequentially disposed from a side on which the metal barrier layer is disposed,
wherein each of the first skin layer, the main layer, and the second skin layer is formed of a polymer-based material comprising an elastomer, and
wherein an elastomer content of the main layer is higher than an elastomer content of each of the first skin layer and the second skin layer.

2. The pouch film of claim 1, wherein a ratio (A:B) of the elastomer content (A) of the main layer to the elastomer content (B) of the first skin layer ranges from 1:0.67 to 1:0.74.

3. The pouch film of claim 1, wherein a ratio (A:C) of the elastomer content (A) of the main layer to the elastomer content (C) of the second skin layer ranges from 1:0.67 to 1:0.74.

4. The pouch film of claim 1, wherein in a ratio (A:B:C) of the elastomer content (A) of the main layer, the elastomer content (B) of the first skin layer, and the elastomer content (C) of the second skin layer, A is 1, B ranges from 0.67 to 0.74, and C ranges from 0.67 to 0.74.

5. The pouch film of claim 1, wherein the elastomer content of the main layer is in a range of 10 wt% to 15 wt%,
the elastomer content of the first skin layer is in a range of 6.7 wt% to 10.8 wt%, and
the elastomer content of the second skin layer is in a range of 6.7 wt% to 10.8 wt%.

6. The pouch film of claim 1, wherein a sum of the elastomer content of the main layer, the elastomer content of the first skin layer, and the elastomer content of the second skin layer is in a range of 26 wt% to 37 wt%.

7. The pouch film of claim 1, wherein each of the first skin layer, the main layer, and the second skin layer comprises a polypropylene-based material as a main component.

8. The pouch film of claim 7, wherein the polypropylene-based material is cast polypropylene (CPP).

9. The pouch film of claim 1, wherein the metal barrier layer comprises stainless steel (SUS).

10. The pouch film of claim 1, wherein the metal barrier layer is formed of stainless steel (SUS) having a thermal conductivity of 15 W/m·k or more.

11. The pouch film of claim 1, wherein the adhesive layer has a melting temperature (Tm) of 140°C or more.

12. The pouch film of claim 1, wherein in a ratio (A:B:C) of the elastomer content (A) of the main layer, the elastomer content (B) of the first skin layer, and the elastomer content (C) of the second skin layer, A is 1, B ranges from 0.67 to 0.74, and C ranges from 0.67 to 0.74,
the metal barrier layer is formed of stainless steel (SUS) having a thermal conductivity of 15 W/m·k or more, and
the adhesive layer has a melting temperature (Tm) of 140°C or more.

13. The pouch film of claim 1, further comprising:
an outer layer bonded to the metal barrier layer,
wherein the metal barrier layer is disposed between the outer layer and the sealant layer.

14. A pouch-type secondary battery to which the pouch film for a secondary battery according to any one of claims 1 to 13 is applied.
